# EUROPEAN PATENT APPLICATION

(11) **EP 0 667 589 A2**
(43) Date of publication of application: **16.08.1995**
(21) Application number: 95101614.6
(22) Date of filing: 08.02.1995
(51) Int. Cl.: G06K 7/10

(54) **Two-dimensional code reader**

(30) Priority: 10.02.1994 JP 16712/94
(71) Applicant: Kabushiki Kaisha TEC, Tagata-gun, Shizuoka 410-23 (JP)
(72) Inventor: Ishikawa, Mamoru, Fuji-shi, Shizuoka-ken (JP)
(74) Representative: Fuchs, Luderschmidt & Partner Patentanwälte

(57) **Abstract**

A portable two-dimensional code reader includes a first order differentiator (51) for differentiating an imaging signal (IN) obtained from a two-dimensional CCD through an imaging processor and a second order differentiator (54) for further differentiating the first-order-differentiated signal from the first order differentiator (51). The code reader further comprises a clock generator (54) with a second order differentiation function for outputting fetch signals for fetching positive and negative peak timings of displacements of the first-order-differentiated signal in accordance with the second-order-differentiated signal, and a positive/negative level floating slicer (53) and a J-K F.F. (55), both of which convert the first-order-differentiated signal into a binary signal (OUT) in accordance with the fetch signals.

## Description

The present invention relates to a portable two-dimensional code reader for reading two-dimensional code information such as a multistage bar code or a matrix code printed on a printing medium.

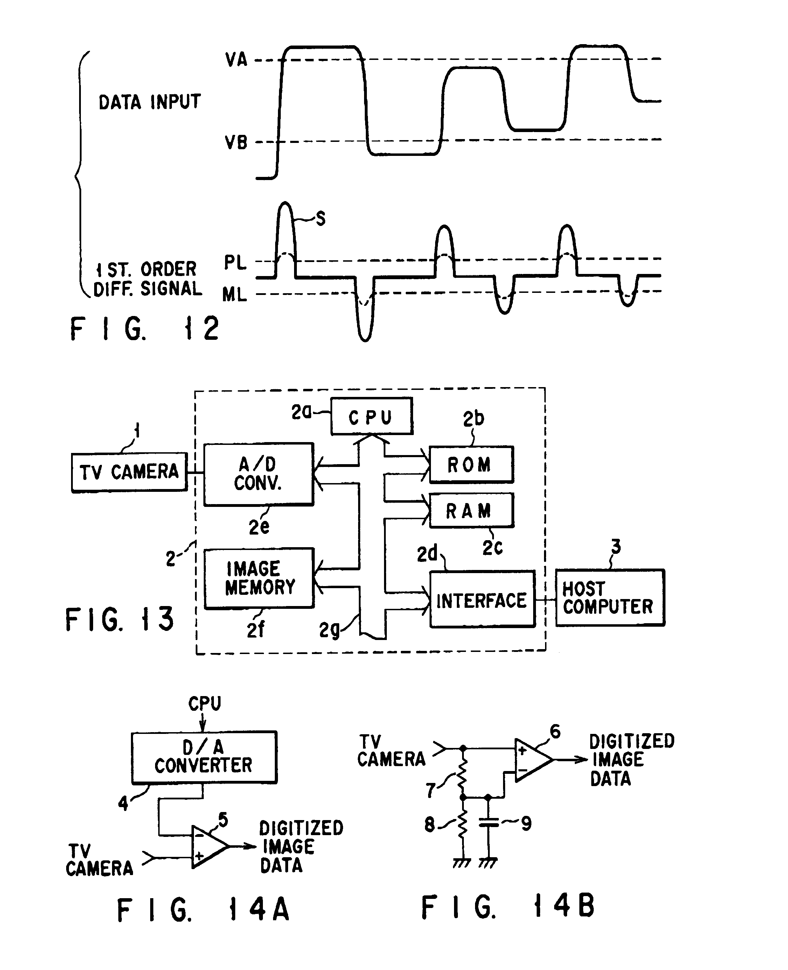

A system using a TV (television) camera and the like is known as a two-dimensional code reader for reading a two-dimensional code, as shown in FIG. 13.

More specifically, this system comprises TV camera 1, controller 2 for processing an imaged signal from TV camera 1 into a code, and host computer 3 which is connected to controller 2 through an interface (e.g., RS232C) and processes code data output from controller 2.

Controller 2 comprises CPU (Central Processing Unit) 2a constituting a controller main body, ROM (Read-Only Memory) 2b storing program data executed by CPU 2a, RAM (Random access Memory) 2c in which various memory areas used in processing executed by CPU 2a are formed, interface 2d connected to host computer 3, A/D (Analog/Digital) converter 2e which is connected to TV camera 1 and receives an analog signal from TV camera 1 and converts it into digital data, and image memory 2f for binarizing digital data output from A/D converter 2e and storing the resultant image data.

Incidentally, the applicant filed on September 17, 1993 a new US. patent application serial No. 121,878 which discloses a two-dimensional code reader. The disclosure of this US. patent application is incorporated herewith.

To convert an analog signal output from a reader constituted by an imaging element such as a TV camera or two-dimensional CCD into binary data corresponding to black and white in the arrangement shown in FIG. 13, the analog signal is converted into multigradation (256 gradation levels) digital data by A/D converter 2e, and then the level and black and white are determined in accordance with the level and change of this digital data, thereby converting it into binary data (this binary data stored in the memory is image data).

In this case, software processing executed by CPU 2a is performed to analyze the digital data, determine black or white, and then convert the digital data into a binary signal. For this reason, accurate binarization processing is performed in consideration of the tonality and reflectance of a sheet, the illuminance of an illumination, and the like.

AS shown in FIGS. 14A and 14B, there is known a circuit for easily converting an analog signal into binary data with the use of neither an A/D converter nor software processing by CPU 2a.

In a digitizer shown in FIG. 14A, D/A (Digi- tal/Analog) converter 4 converts threshold data (digital signal) from the CPU into an analog signal (voltage) and supplies this analog signal as a threshold to the inverting input terminal of comparator 5, and a signal from a TV camera or the like is supplied to the non-inverting input terminal of this comparator 5.

Comparator 5 compares the signal input from the TV camera or the like with the analog signal serving as the threshold input from D/A converter 4. When the signal input from the TV camera has a level higher than that of the analog signal serving as a threshold, comparator 5 determines this level as black (or white) and outputs a signal of high level. However, when the signal input from the TV camera has a level lower than that of the analog signal serving as a threshold, comparator 5 determines this level as white (or black) and outputs a signal of low level.

At this time, when the threshold data from the CPU is adjusted to be appropriate data, accurate binarization processing can be performed.

In the digitizer shown in FIG. 14B, a signal from a TV camera or the like is input to the non- inverting input terminal of comparator 6, and at the same time, a serial voltage divider consisting of first and second resistors 7 and 8 is connected between the non-inverting input terminal of comparator 6 and ground. Capacitor 9 is connected between the voltage division output point and ground. The node between the voltage division output point and capacitor 9 is connected to the inverting input terminal of comparator 6.

More specifically, for example, the signal from the TV camera is an analog signal proportional to the intensity of light reflected by a target object. That is, a signal corresponding to the white portion of an image is sat at high level, while a signal corresponding to the black portion of an image is set at low level.

A voltage divided by the serial voltage divider consisting of first and second resistors 7 and 8 is input as a threshold to the inverting input terminal of comparator 6. That is, a predetermined percentage of the level of the signal output from the TV camera serves as a threshold level.

In a signal corresponding to a portion where the signal from the TV camera changes from white to black, the predetermined percentage of a signal of high level corresponding to the white portion serves as a threshold level first.

The signal from the TV camera then changes to a signal of low level corresponding to the black portion. In this case, it takes a certain time for the threshold level input to the inverting input terminal to drop due to a discharge time constant determined by capacitor 9 and second resistor 8. For this reason, the threshold level input to the inverting input terminal cannot follow a change, exceeding the predetermined percentage of the level of the signal input from the TV camera to the non- inverting input terminal of the comparator, like a boundary from white to black. The level at the output terminal of comparator 6 changes from high level corresponding to the white portion to low level corresponding to the black portion.

The width of black bars and white bars (i.e., a blank portion between adjacent black bars) of a bar code is generally small. The detection time for this width is shorter than the discharge time constant determined by capacitor 9 and second resistor 8. Then, if a signal of high level corresponding to the white portion is input to the non-inverting input terminal before the level input to the inverting input terminal becomes lower than the level (low level) of the signal input to the noninverting input terminal, the level at the output terminal of comparator 6 becomes high level corresponding to the white portion. Therefore, the level input to the non-inverting input terminal also rises with an increase in level of the non-inverting input terminal.

Meanwhile, the signal from the TV camera varies due to signal noise, an illumination irregularity, and the like. The width of such variation generally does not exceed the predetermined percentage if the voltage division ratio of the serial voltage divider comprising first and second resistors 7 and 8 is appropriately selected. In this case, the threshold level can sufficiently follow the variation of this width by discharge from capacitor 9, and therefore an output from comparator 6 does not change.

That is, since the threshold level floats with respect to the signal from the TV camera, the threshold level can follow a moderate variation which does not have a clear boundary.

Accurate binarization processing can be performed by this digitizer in consideration of the tonality and reflectance of a sheet, the illuminance of an illumination, and the like.

In the system shown in FIG. 13, the analog signal is converted into digital data using the A/D converter, and then this digital data is converted into a binary signal. The data amount of the above digital data (8 bits) is about eight times that of the binary signal. To process the above digital data, a CPU having a higher speed than that for processing binary data must be undesirably used.

Binarization processing is performed by software processing, so the CPU is overloaded by this binarization processing.

The above problems result in high cost in realizing a handy type, compact two-dimensional code reader.

In the digitizer shown in FIG. 14A, the threshold data must be output from the CPU to comparator 5 in consideration of the tonality and reflectance of a sheet, the illuminance of an illumination, and the like. When irregularities in the illuminance of an illumination and the tonality of a sheet are present, the threshold data from the CPU must be correspondingly changed.

In the digitizer shown in FIG. 14B, although the threshold is output to comparator 6 in consideration of the tonality and reflectance of a sheet, the illuminance of an illumination, and the like, the following problem is posed. A frame is arranged to represent a two-dimensional code, and capacitor 9 is discharged for a long black portion of the frame. The threshold level input to the inverting input terminal is lowered to the signal level input from the TV camera to the non-inverting input terminal of comparator 6. For this reason, an output from comparator 6 becomes unstable. The output may be undesirably inverted to high level representing the white portion although comparator 6 finally detects the black portion.

It is accordingly an object of the present invention to provide a two-dimensional code reader capable of accurately converting a signal from a sensor for reading an image into a binary signal not by software processing but by hardware in consideration of the tonality and reflectance of a sheet, the illuminance of an illumination, and the like, while influences caused by irregularities in the tonality of a sheet and the illuminance of an illumination are substantially eliminated.

To achieve the above object, a two-dimensional code reader of the invention is provided with a light source for supplying light to a two-dimensional code printed on a print material, a two-dimensional image reader which receives light reflected from the two-dimensional code and outputs an electrical signal representing an amount of the received reflected light, an optical system for focusing the reflected light of the two-dimensional code onto an image capturing place of the two-dimensional image reader, a digitizer circuit for converting the electrical signal from the two-dimensional image reader into a digitized signal, and an output circuit for out-putting the digitised signal converted by the digitizer circuit. This two-dimensional code reader is characterized by comprising: a first order differentiator for differentiating the electrical signal provided by said two-dimensional image reader to provide a first order differentiated output; a second order differentiator for differentiating the first order differentiated output provided by said first order differentiator to provide a second order differentiated output; a clock generator for generating a timing clock indicating each timing of positive-to-negative and negative-to-positive changes in the second order differentiated output; and a digitized signal output circuit, which fetches the first order differentiated output provided by said first order differentiator in accordance with the timing of generation of the timing clock generated by said clock generator, for outputting the digitized signal.

In this arrangement, when the apparatus of this invention is brought into tight contact with or comes close to a two-dimensional code printed on a printing medium, light from a light-emitting portion is irradiated on the two-dimensional code. Light reflected by the two-dimensional code is focused by an optical system mechanism at a position of a plurality of solid-stage imaging elements constituting a two-dimensional reading means.

Each solid-stage imaging element of the two-dimensional reading means outputs an electrical signal corresponding to the mount of light reflected and focused by the optical system mechanism. This electrical signal is differentiated by a first order differentiator in the digitizer. The first-order-differentiated signal is further differentiated by a second order differentiator. A fetch timing signal generator forms and outputs a fetch signal from a change point from the positive value to the negative value of the second-order-differentiated signal and a change point from the negative value to the positive value thereof. The binary signal output circuit fetches the first-order-differentiated signal in accordance with this fetch signal, detects a boundary from white to black and a boundary from black to white, converts the input signals into binary signals corresponding to black and white, and outputs the binary signals.

This invention can be more fully understood from the following detailed description when taken in conjunction with the accompanying drawings, in which:
FIG. 1 is a perspective view showing a two-dimensional code reader according to an embodiment of the present invention;
FIG. 2 is a sectional view showing the two-dimensional code reader of this embodiment;
FIG. 3 is a block diagram showing the circuit arrangement of the main part of the two-dimensional code reader of this embodiment;
FIGS. 4A and 4B are block diagrams showing the circuit arrangements of a code image processor and an imaging processor shown in FIG. 3 according to this embodiment, respectively;
FIG. 5 is a block diagram showing the circuit arrangement of an optional I/F shown in FIG. 3 according to this embodiment;
FIG. 6 is a block diagram showing the circuit arrangement of a digitizer shown in FIG. 3 according to this embodiment;
FIG. 7 is a circuit diagram showing a first order differentiator in the digitizer according to this embodiment;
FIG. 8 is a circuit diagram showing an amplifier in the digitizer according to this embodiment;
FIG. 9 is a circuit diagram showing a positive/negative level floating slicer in the digitizer according to this embodiment;
FIG. 10 is a circuit diagram showing a clock generator with a second order differentiation function in the digitizer according to this embodiment;
FIG. 11 is a timing chart of various signal waveforms in the digitizer according to this embodiment;
FIG. 12 is a timing chart of signal waveforms for explaining positive/negative level floating in the positive/negative level floating slicer according to this embodiment;
FIG. 13 is a block diagram showing the circuit arrangement of the main part of a two-dimensional code reader to which the present invention is not applied: and
FIGS. 14A and 14B are a block diagram and a circuit diagram, respectively, showing digitizers to which the present invention is not applied.

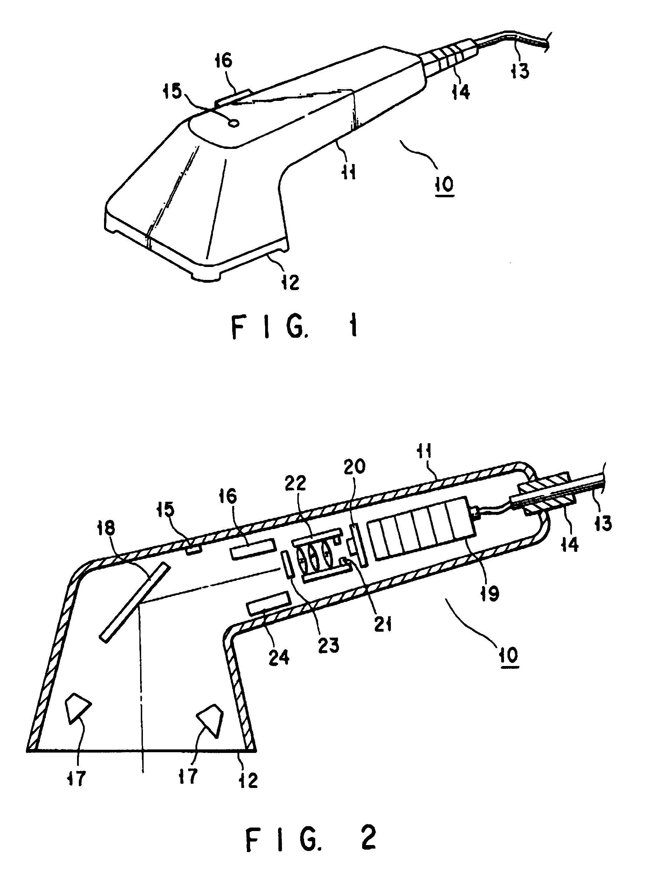

An embodiment of the present invention will be described with reference to the accompanying drawings. In this embodiment, the present invention is applied to two-dimensional handy reader 10. FIG. 1 is a perspective view of this two-dimensional handy reader 10, and FIG. 2 is a sectional view thereof.

Reference numeral 11 denotes a frame integrally made of a plastic material or the like so as to obtain a hollow structure. Various optical members, circuits, and the like (to be described later) are incorporated in this frame 11.

One end of this frame 11 has an opening having a small opening area. The other end of frame 11 has an opening having a large opening area, which serves as reading unit 12. Connection cable 13 formed of power supply lines and signal lines, which are connected to external devices (not shown) are inserted into the small opening at one end of frame 11. Connection cable 13 is fixed to frame 11 by protective member 14.

An LED (Light-Emitting Diode) serving as scan display LED 15 is buried in the upper portion of frame 11. Code reading switch 16 which is turned on by an operator in reading a two-dimensional code is arranged on a side surface of frame 11.

A plurality of LED portions 17 serving as light-emitting portions are arranged in the peripheral portion inside reading unit 12 serving as the large opening at the other end of frame 11 so as to irradiate the entire two-dimensional code with almost uniform illuminance. Each LED portion 17 comprises an LED and a plastic diffusion lens for uniformly diffusing light from this LED.

Angle conversion mirror 18 is arranged deeply inside reading unit 12, i.e., at a bent portion of frame 11 and is positioned at a predetermined angle with respect to the direction of reading unit 12. Note that a prism or the like may be used in place of angle conversion mirror 18.

Circuit unit 19 electrically connected to connection cable 13 and two-dimensional CCD (Charge-Coupled Device) 20 serving as a two-dimensional reading means are arranged inside a grip portion of frame 11.

Circuit unit 19 comprises a power supply interface circuit, scan display LED 15, a display LED/buzzer controller for controlling a buzzer (to e described later) or the like, the CPU (Central Processing Unit) constituting the controller main body, a main controller constituted by various memories, a decoding unit, a code image processor, an imaging processor, and the like. The respective circuits of this circuit unit 19 have a multilayered board structure, and chip ports constituting the respective circuits are mounted on one or both of the surfaces of each board.

Circuit unit 19 is electrically connected to two-dimensional CCD 20. In two-dimensional CCD 20, CCD elements (not shown) are arranged to oppose angle conversion mirror 18 in a matrix form (effective pixel count: 250,000; effective pixel count for a higher-density two-dimensional code: 400,000 or more). Note that CCD elements are used in this embodiment, but solid-state imaging elements of another scheme may be used in place of the CCD elements.

Stop mechanism 21 for adjusting the amount of light passing between two-dimensional CCD 20 and angle conversion mirror 18, combination lens 22, and filter 23 for reducing unnecessary external light are arranged between two-dimensional CCD 20 and angle conversion mirror 18 in an order named. The focal point of combination lens 22 is adjusted to cause light reflected by the printing medium to have a contrast level enough to allow binarization of an output signal from two-dimensional CCD 20 when the printing medium such as a label printed with a two-dimensional code comes close to the range within 10 mm from reading unit 12. More specifically, when the distance between reading unit 12 and the printing medium is 1 mm, light is focused on the respective CCD elements of two-dimensional CCD 20.

Combination lens 22 is used to minimize distortion occurring in the received image. In this sense, an aspherical lens capable of minimizing the distortion may be used in place of combination lens 22. If a ghost formed by reflection on each lens surface of combination lens 22 poses a problem, a lens having a lens surface treated with an antireflection coating may be used in combination lens 22.

Stop mechanism 21, combination lines 22, and filter 23 constitute the optical system mechanism.

Circuit unit 19 is electrically connected to code reading switch 16 and buzzer 24 arranged in frame 11. This buzzer 24 changes its tone color and the number of times of tone generation to inform the user of an error or an end of reading.

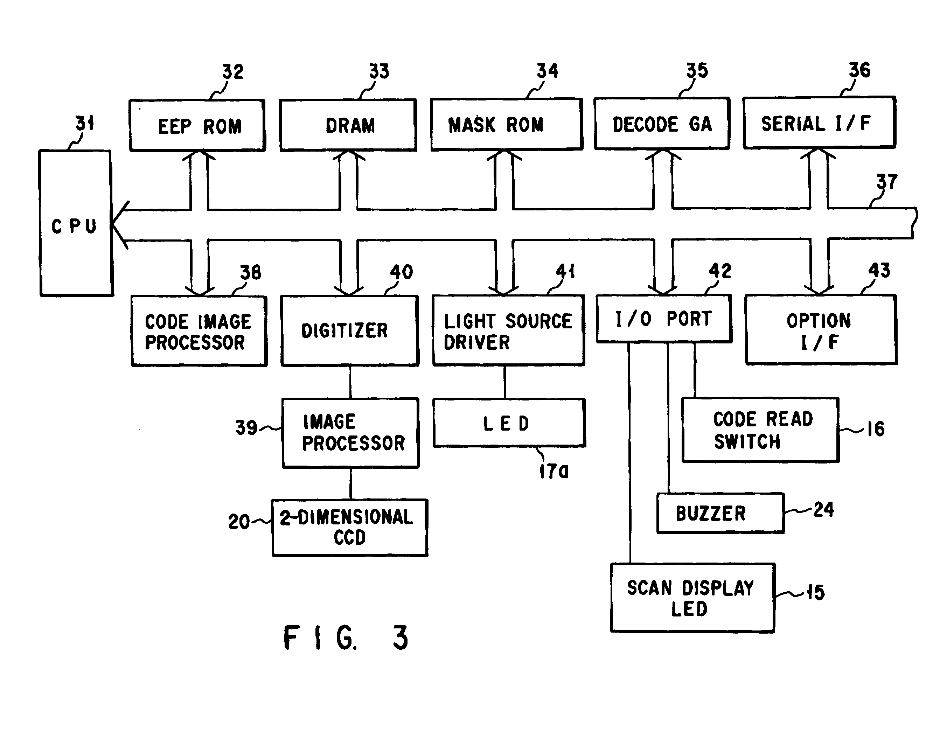

FIG. 3 is a block diagram showing the circuit arrangement of the main part of circuit unit 19 in two-dimensional handy reader 10.

CPU 31 is connected, through system bus 37, to EEPROM (Electrically Erasable Programmable Read-Only Memory) 32 in which program data processed by CPU 31 constituting the main controller and initial settings are stored, DRAM (Dynamic Random Access Memory) 33 in which various memory areas used for processing executed by CPU 31 are formed, mask ROM (Read-Only Memory) 34 in which read formats corresponding to various types of two-dimensional symbols (two-dimensional codes) are stored, decoding GA (Gate Array) 35 for converting read image data into code data on the basis of the read format from mask ROM 34, and serial I/F (Interface) 36 connected to an external data processing device (not shown) such as a host computer through a serial line.

CPU 31 is also connected, through system bus 37, to code image processor 38, digitizer 40 for controlling two-dimensional CCD 20 and performing binarization for converting an imaging signal output from imaging processor 39 for amplifying a signal from two-dimensional CCD 20 into binary data, light source driver 41 for turning on LEDs 17a constituting LED light-emitting portions 17, I/O (In- put/Output) port 42 for receiving an output signal from code reading switch 16 and outputting drive signals to buzzer 24 and scan display LED 15, and optional I/F 43 for performing communication associated with code data by means of a radio channel or an infrared ray.

In circuit unit 19, the display LED/buzzer controller is constituted by I/O port 43, the main controller is constituted by CPU 31, EEPROM 32, DRAM 33, and serial I/F 36, and the decoding unit is constituted by mask ROM 34 and decoding GA 35.

Incidentally, a manner of decoding a content of the two-dimensional code read by handy reader 10 is known and suggested by, for example, USP. 5,054,104. The disclosure of this US. patent application is incorporated herewith.

As shown in FIG. 4A, code image processor 38 comprises frame memory 38a in which image data is mapped by binary data from digitizer 40, and image processor 38b for performing processing such as density correction, emphasis processing, and smoothing of the image data mapped in frame memory 38a, sequentially extracting image data representing only two-dimensional codes, and performing processing such as rotation and feature extraction of the extracted image data, thereby converting image data into two-dimensional code image data which can be easily processed. Frame memory 38a and image processor 38b are connected to system bus 37.

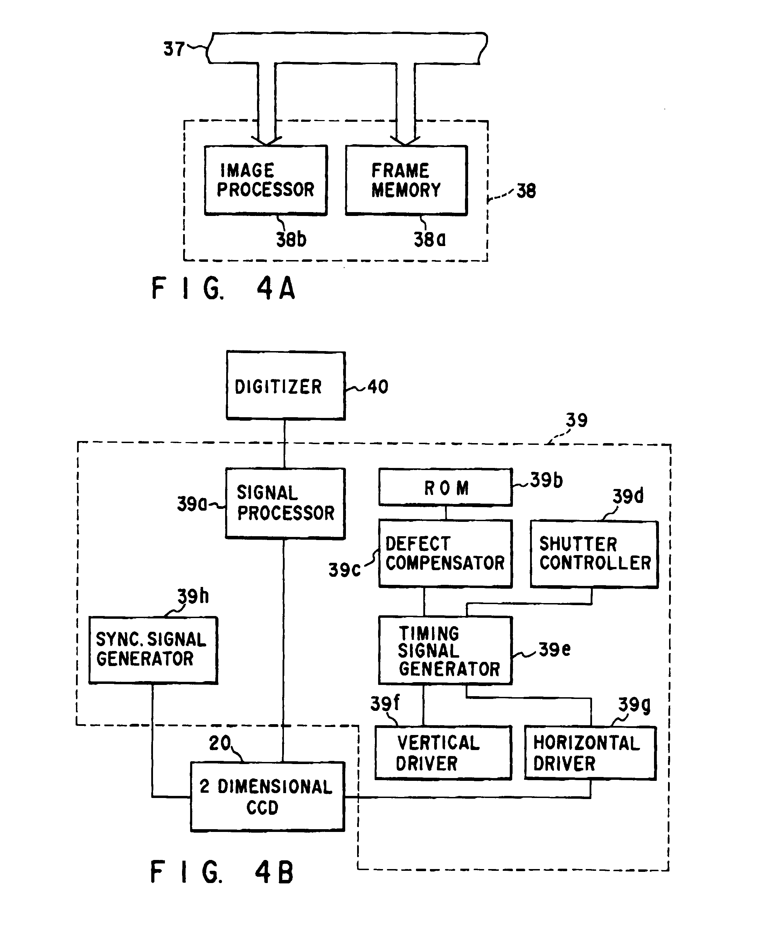

As shown in FIG. 4B, imaging processor 39 comprises signal processor 39a which is connected to digitizer 40 and receives an output signal from two-dimensional CCD 20 and amplifying this signal, ROM 39b in which manufacturing variation (defect) information of the CCD elements in two-dimensional CCD 20 is stored, defect compensator 39c for compensating the read timings of the respective CCD elements on the basis of the information stored in ROM 39b, shutter controller 39d for setting a read time of the printing medium on which a two-dimensional code is printed, timing signal generator 39e for generating read timing signals on the basis of a signal from shutter controller 39d, vertical driver 39f and horizontal driver 39g respectively for designating CCD elements to be read in two-dimensional CCD 20, sync signal generator 39h for controlling timings for out-putting an image signal from two-dimensional CCD 20 to signal processor 39a, and the like.

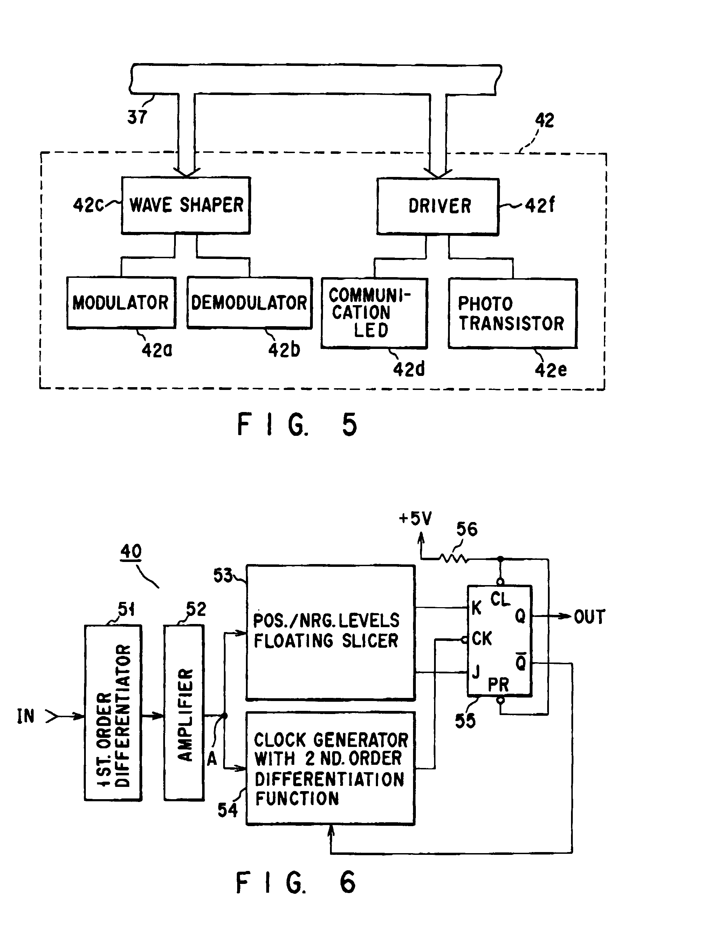

If optional I/F 43 can perform, e.g., both radio communication and infrared communication, as shown in FIG. 5, optional I/F 43 comprises wave shaper 42c connected to transmission modulator 42a and reception demodulator 42b which are arranged for radio communication, and driver 42f connected to transmission communication LED 42d and reception phototransistor 42e which are arranged for infrared communication.

Note that wave shaper 42c and driver 42f are connected to system bus 37.

FIG. 6 is a block diagram showing the circuit arrangement of digitizer 40.

An imaging signal output from imaging processor 39 is input from input terminal IN of this digitizer to first order differentiator 51. A signal differentiated by this first order differentiator 51 is input from common node A to positive/negative level floating slicer 53 through amplifier 52 and clock generator 54 with second order differentiation function.

A negative detection signal sliced at the negative level in positive/negative level floating slicer 53 is input to the K input terminal of J-K F.F. (Flip-Flop) 55 serving as a binary signal output circuit (i.e., output means). A positive detection signal floating-sliced at the positive level of positive/negative level floating slicer 53 is input to the J input terminal of J-K F.F. 55. A clock signal (trigger signal) output from clock generator 54 with second order differentiation function is input to the clock (CK) input terminal of J-K F.F.

A signal at the inverted Q (Q) output terminal of J-K F.F. is fed back to clock generator 54 with second order differentiation function. The Q output terminal of J-K F.F. outputs a binary signal (binary data) from output terminal OUT of digitizer 40 to system bus 37.

The CL (clear) and PR (preset) terminals of J-K F.F. 55 are connected to a +5-V control power supply through first resistor 56.

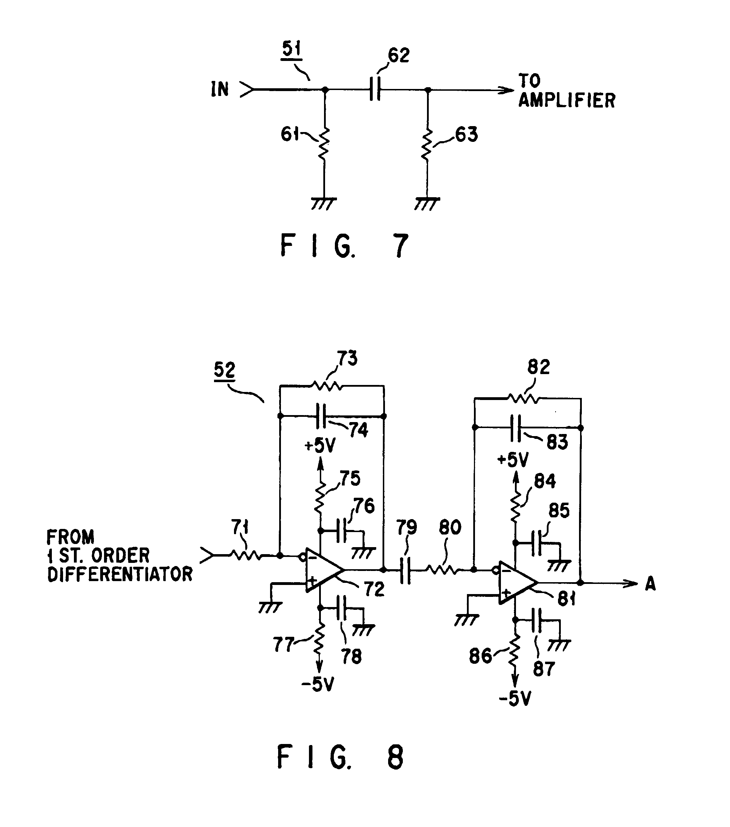

FIG. 7 is a circuit diagram of first order differentiator 51.

Second resistor 61 is connected between input terminal IN of digitizer 40 and ground (GND = 0 V). One terminal of first capacitor 62 is connected to the node between input terminal IN of digitizer 40 and second resistor 61. Third resistor 63 is connected between the other terminal of first capacitor 62 and ground. A first-order-differentiated signal is output from the node between first capacitor 62 and third resistor 63 to amplifier 52.

FIG. 8 is a circuit diagram of amplifier 52.

The first-order differentiated signal output from first order differentiator 51 is input to the inverting input terminal (negative logic) of first operational amplifier 72 through fourth resistor 71. The ground potential (0 V) is connected to the non-inverting input terminal of first operational amplifier 72. Fifth resistor 73 and second capacitor 74 are connected in parallel with each other between the inverting input terminal (negative logic) and the output terminal of first operational amplifier 72.

One power supply input terminal of first operational amplifier 72 is connected to the +5-V control power supply through sixth resistor 75, and at the same time is grounded through third capacitor 76. The other power supply input terminal is connected to a -5-V power supply through seventh resistor 77 and at the came time is grounded through fourth capacitor 78.

The output terminal of first operational amplifier 72 is connected to the inverting input terminal (negative logic) of second operational amplifier 81 through a series circuit consisting of fifth capacitor 79 and eighth resistor 80. The non-inverting input terminal of second operation amplifier 81 is grounded, and ninth resistor 82 and sixth capacitor 83 are connected in parallel with each other between the inverting input terminal (negative logic) and the output terminal of second operational amplifier 81.

One power supply input terminal of second operational amplifier 81 is connected to the +5-V control power supply through 10th resistor 84 and at the same time is grounded through seventh capacitor 85. The other power supply input terminal of second operational amplifier 81 is connected to the -5-V power supply through 11th resistor 86 and at the same time is grounded through eighth capacitor 87.

The output terminal of second operational amplifier 81 is connected to common node A between positive/negative level floating slicer 53 and the input side of clock generator 54 with second order differentiation function.

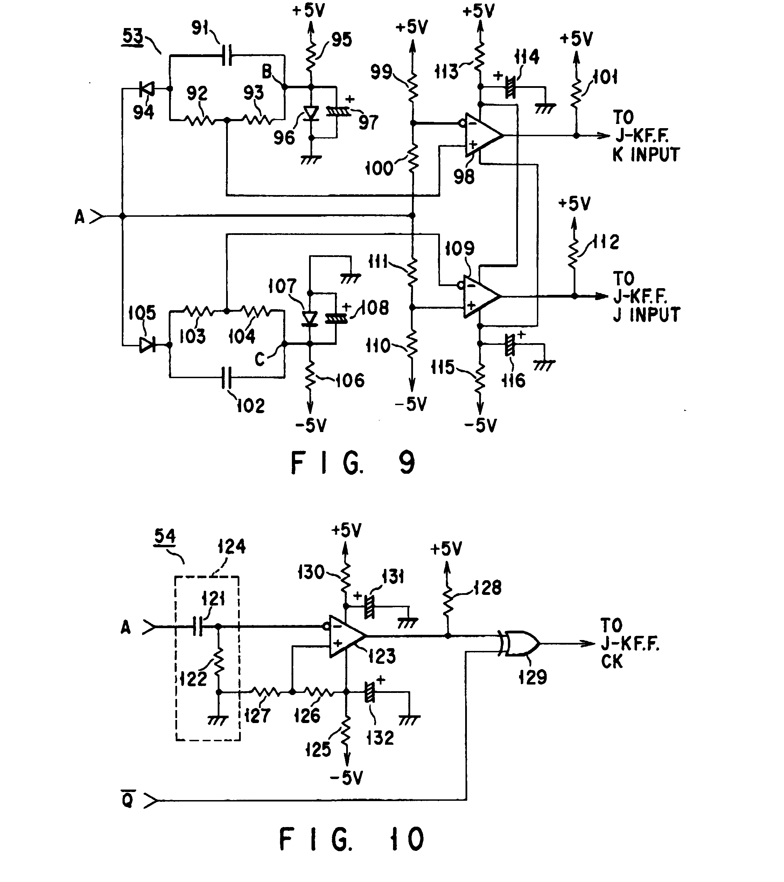

FIG. 9 is a circuit diagram of positive/negative level floating slicer 53.

A series voltage divider comprising 11th resistor 92 and 12th resistor 93 is connected to ninth capacitor 91, and the node between one terminal of ninth capacitor 91 and the remaining terminal of 11th resistor 92 is connected to the anode terminal of first diode 94. The cathode terminal of first diode 94 is connected to amplifier 52 through common node A.

The node B between the other terminal of ninth capacitor 91 and the remaining terminal of 12th resistor 93 is connected to the + 5-V control power supply through 13th resistor 95 and at the same time to the anode terminal of second diode 96. The cathode terminal of diode 96 is circuit-grounded (0 V), and first electrolytic capacitor 97 is connected in parallel with second diode 96.

The voltage division output point of the series voltage divider comprising 11th resistor 92 and 12th resistor 93 is connected to the non-inverting input terminal of first comparator 98. A series voltage divider comprising 14th resistor 99 and 15th resistor 100 is connected between the control power supply and common node A. The voltage division output point of this series voltage divider is connected to the inverting input terminal (negative logic) of first comparator 98.

The output terminal of this comparator 98 is connected to the +5-V control power supply through 16th resistor 101 and at the same time to the K input terminal of J-K F.F. 55.

The above circuit is a negative level floating slicer for outputting a negative detection signal. The following circuit is a positive level floating slicer for outputting a positive detection signal.

A series voltage divider comprising 17th resistor 103 and 18th resistor 104 is connected to 10th capacitor 102. The node between one terminal of 10th capacitor 102 and the remaining terminal of 17th resistor 103 is connected to the cathode terminal of third diode 105, and the anode terminal of this third diode 105 is connected to amplifier 52 through common node A.

The node C between the other terminal of 10th capacitor 102 and the remaining terminal of 18th resistor 104 is connected to the -5-V power supply through 19th resistor 106 and at the same time to the cathode terminal of fourth diode 107. The anode terminal of fourth diode 107 is circuit-grounded, and second electrolytic capacitor 108 is connected in parallel with fourth diode 107.

The voltage division output point of a series voltage divider comprising 17th resistor 103 and 18th resistor 104 is connected to the non-inverting input terminal of second comparator 109. A series voltage divider comprising 20th resistor 110 and 21 st resistor 111 is connected between the -5-V power supply and common node A. The voltage division output point of this series voltage divider is connected to the inverting input terminal (negative logic) of second comparator 109.

The output terminal of this comparator 109 is connected to the +5-V control power supply through 22nd resistor 112 and at the same time to the J input terminal of J-K F.F. 55.

One power supply input terminal of first comparator 98 and one power supply input terminal of second comparator 109 are connected to the +5-V control power supply through 23rd resistor 113, and at the same time are grounded through 5th electrolytic capacitor 114. The other power supply input terminal of first comparator 98 and the other power supply input terminal of second comparator 109 are connected to the -5-V power supply through 24th resistor 115 and at the same time are grounded through sixth electrolytic capacitor 116.

FIG. 10 is a circuit diagram of clock generator 54 with second order differentiation function.

The output terminal of amplifier 52 is connected to one terminal of 11th capacitor 121 through common node A. The other terminal of 11th capacitor 121 is connected to ground potential (0 V) through 25th resistor 122 and at the same time to the inverting input terminal (negative logic) of third comparator 123. Eleventh capacitor 121 and 25th resistor 122 constitute second order differentiator 124.

Incidentally, differentiator 124 has a first order differentiation circuit construction. However, since differentiator 124 is functionally connected in series to differentiator 51 of FIG. 7, a result of a second order differentiation for the signal at input terminal IN can be obtained from differentiator 124.

A series circuit comprising 26th resistor 125, 27th resistor 126, and 28th resistor 127 is connected between ground and the -5-V power supply. The node between 27th resistor 126 and 28th resistor 127 is connected to the non-inverting input terminal of third comparator 123.

The output terminal of third comaprator123 is connected to the +5-V control power supply through 29th resistor 128 and at the same time to one input terminal of exclusive OR gate 129. The other input terminal of this exclusive OR gate 129 is connected to the inverted Q output terminal of J-K F.F. 55.

One power supply input terminal of third comparator 123 is connected to the +5-V control power supply through 30th resistor 130 and at the same time is grounded through seventh electrolytic capacitor 131. The other power supply input terminal is connected to the -5-V power supply through 26th resistor 125 and at the same time is grounded through eighth electrolytic capacitor 132.

In this embodiment having the above arrangement, to read a two-dimensional code printed on a printing medium with two-dimensional code reader 10, reading unit 12 of two-dimensional code reader 10 is set close to the two-dimensional code on the printing medium, and code reading switch 16 is turned on. At this time, LED light-emitting portions 17 are turned on, and light from LED light-emitting portions 17 is irradiated on the two-dimensional code on the printing medium. Light reflected by this two-dimensional code is reflected in the direction of two-dimensional CCD 20 by angle conversion mirror 18. An external light component is reduced by filter 23, and the reflected light is focused at the position of two-dimensional CCD 20 by combination lens 22 through stop mechanism 21.

The focused reflected light is converted into electrical signals having voltage levels corresponding to the amounts of light received by the respective CCD elements of two-dimensional CCD 20. These electrical signals are amplified by imaging processor 39 at predetermined timings and are transferred as an imaging signal to digitizer 40.

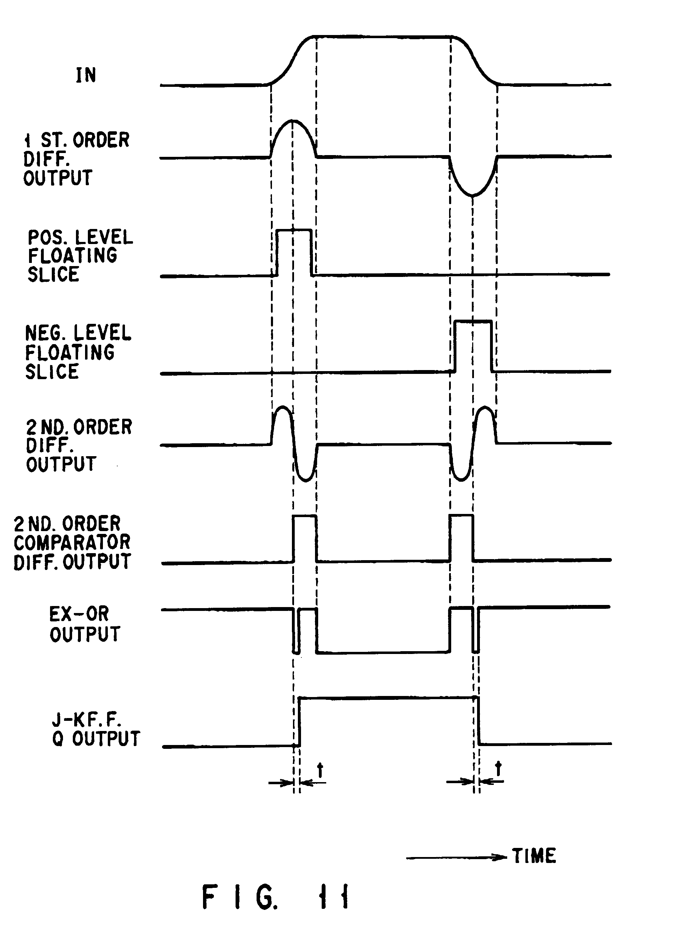

As shown in the timing chart of FIG. 11, in digitizer 40, an imaging signal (at terminal IN) is differentiated by first order differentiator 51, and the first-order-differentiated signal (first order differentiation output) is amplified by amplifier 52. The amplified signal is output to positive/negative level floating slicer 53 and clock generator 54 with second order differentiation function.

As shown in FIG. 12, positive/negative level floating slicer 53 operates as follows. Even if a signal before first order differentiation has a data input waveform with level variations which are not necessarily higher than or lower than predetermined upper and lower limit voltage levels VA and VB, the negative level floating slicer performs floating at a low response speed so that the threshold level indicated by broken line ML is lower than first-order-differentiated signal S by a predetermined voltage (i.e., a voltage required to remove noise), thereby forming a negative detection signal. The positive level floating slicer performs floating at a low response speed so that the threshold level indicated by broken line PL is set higher than first-order-differentiated signal S by the predetermined voltage (i.e., the voltage required for removing noise), thereby forming a positive detection signal. Therefore, a displacement portion (a boundary portion between black and white) of an imaging signal can be more accurately detected.

This positive/negative level floating slicer 53 can only detect the width of a displacement portion of the first-order-differentiated signal. To accurately extract a displacement point representing a boundary between black and white in the imaging signal, a trigger signal is input to J-K F.F. 55 to fetch data at the peak of the displacement of the first-order-differentiated signal.

More specifically, in positive/negative level floating slicer 53 in FIG. 11, the negative level floating slicer detects a negatively changed portion of the first-order-differentiated signal from first order differentiator 51. A detection signal (negative level floating slice) representing the negatively changed portion is input to the K input terminal of J-K F.F. 55. The positive level floating slicer detects a positively changed portion of the first-order-differentiated signal from first order differentiator 51. A detection signal (positive level floating slice) representing the positively changed portion is input to the J input terminal of J-K F.F. 55.

On the other hand, in clock generator 54 with second order differentiation function, second order differentiator 124 differentiates the first-order-differentiated signal from first order differentiator 51, and the resultant second-order-differentiated signal (second order differentiation output) is output to third comparator 123.

A reference voltage having a predetermined negative potential (i.e., a negative potential close to the ground potential to allow removal of noise) is input to third comparator 123. A negatively changed portion of the second-order-differentiated signal is detected, and a detection signal (second order differentiation comparator output) representing the negatively changed portion is input to one input terminal of exclusive OR gate 129.

The output of J-K F.F. 55 changes in accordance with the potentials at the J and K input terminals at the trailing edge (negative logic) of the signal input to the CK (clock) input terminal.

When an output from the Q output terminal of J-K F.F. 55 is set at low level, a signal of high level from the inverted Q output terminal of J-K F.F. 55 is fed back to the other input terminal of exclusive OR gate 129. In this case, an output (second order differentiation comparator output) from third comparator 123 goes to high level, and exclusive OR gate 129 goes to low level.

J-K F.F. 55 is triggered in response to this trailing edge. Since the detection signal (positive level floating slice) representing the positively changed portion of the first order differentiation is set at high level, an output from the Q output terminal of J-K F.F. 55 goes to high level with a delay of short time t, and an output from the inverted Q output terminal goes to low level. By this change, an output from exclusive OR gate 129 goes to high level again.

Even if the output from third comparator 123 goes to low level, and the output from exclusive OR gate 129 goes to low level, signals output from the Q and inverted Q output terminals of J-K F.F. 55 do not change because both the detection signal (positive level floating slice) representing the positively changed portion of the first-order-differentiated signal and the detection signal (negative level floating slice) the negatively changed portion thereof are set at low level.

In addition, when the output from third comparator 123 goes to high level, the output from exclusive OR gate 129 goes to high level. When the output from third comparator 123 goes to low level, the output from exclusive OR gate 129 goes to low level.

J-K F.F. 55 is triggered in response to this trailing edge. Since the detection signal (negative level floating slice) representing the negatively changed portion of the first order differentiation is set at high level, an output from the Q output terminal of J-K F.F. 55 goes to high level with a delay of short time t, and an output from the inverted Q output terminal goes to low level. By this change, an output from exclusive OR gate 129 goes to high level again (EX-OR output, J-K F.F. Q output).

A signal from the Q output terminal of J-K F.F. 55 is output as binary data which is then transferred to code image processor 38.

Code image processor 38 further extracts image data of only the two-dimensional code portion from the image data obtained from this binary data. Various code processing operations of the extracted image data representing only the two-dimensional code portion are performed in code image processor 38, thereby converting the image data into two-dimensional code image data.

This two-dimensional code image data is decoded by decoding GA 35 on the basis of a format representing the type of two-dimensional code stored in mask ROM 34, and is output as two-dimensional code data to the host computer or the like through connection cable 13.

According to this embodiment, as described above, the portable two-dimensional code reader comprises first order differentiator 51 for differentiating an imaging signal obtained from two-dimensional CCD 20 through imaging processor 39 and second order differentiator 124 for further differentiating the first-order-differentiated signal from first order differentiator 51. The code reader further comprises clock generator 54 with second order differentiation function for out-putting fetch signals for fetching the positive and negative peak timings of displacements of the first-order-differentiated signal in accordance with the second-order-differentiated signal, and positive/negative level floating slicer 53 and J-K F.F. 55, both of which convert the first-order-differentiated signal into a binary signal in accordance with the fetch signals. Therefore, the imaging signal from two-dimensional CCD 20 can be converted into a binary signal not by software processing but by the circuit arrangement.

In addition, the imaging signal is differentiated by the first order differentiator, and this first-order-differentiated signal is fetched at the timings of the fetch signals obtained from the second-order-differentiated signal obtained by the second order differentiator. The boundary between black and white of an image to be read can be determined at the center of the change in imaging signal. For this reason, even if the output level of two-dimensional CCD 20 is consistently high or low due to the tonality and reflectance of a sheet, or even if the illuminance of an illumination is low or high, the imaging signal can be accurately converted into a binary signal corresponding to black and white.

Further, since the boundary between black and white is determined at the center of a change of the imaging signal, influences caused by the irregularity of tonality of a sheet, a stain which does not represent a clear boundary, or the irregularity of an illumination can be eliminated, thereby accurately converting the imaging signal into a binary signal.

Since binarization processing can be attained using a simple hardware arrangement without using a higher-speed CPU, an inexpensive, compact two-dimensional code reader can be obtained.

In this embodiment, first order differentiator 51 and second order differentiator 124 are constituted by RC circuits (i.e., circuits constituted by resistors and capacitors), and J-K F.F. 55, exclusive OR gate 129, and the like are used to constitute digitizer 40. However, the present invention is not limited to this. Various changes and modifications may be made without departing from the spirit and scope of the invention.

For example, first and second order differen- tiators may be formed by operational amplifiers and the like.

As has been described above, according to the present invention, the influences caused by the tonality of a sheet and the irregularity of an illumination can be eliminated to accurately convert the signal from an image read sensor into a binary signal not by software processing but by hardware. In addition, a two-dimensional code reader can be provided as an inexpensive, compact apparatus.

## Claims

1. A code pattern digitizer system comprising:
means (20, 39 in FIG. 3) for reading a code pattern on a material to provide a code pattern signal (IN, 1 st row in FIG. 11) whose level changes in correspondence with the read code pattern;
first order differentiator means (51 in FIG. 6) for differentiating with respect to time a level change of the code pattern signal (IN) provided by said reading means (20, 39), so as to provide a first order differentiated output (2nd row in FIG. 11);
positive level change detector means (102-112 in FIG. 9), responsive to a positive level change in the first order differentiated output provided by said first order differentiator means (51), for detecting a positive level slice (3rd row in FIG. 11) representing a timing of a level change in a positive direction of the first order differentiated output;
negative level change detector means (91-101 in FIG. 9), responsive to a negative level change in the first order differentiated output provided by said first order differentiator means (51), for detecting a negative level slice (4th row in FIG. 11) representing a timing of a level change in a negative direction of the first order differentiated output;
second order differentiator means (124 in FIG. 10) for differentiating with respect to time a level change of the first order differentiated output provided by said first order differentiator means (51) to provide a second order differentiated output (5th row in FIG. 11);
clock generator means (121-129 in FIG. 10), responsive to the positive level slice detected by said positive level change detector means (102-112), the negative level slice detected by said negative level change detector means (91-101), and the second order differentiated output provided by said second order differentiator means (124), for generating a timing clock (7th row in FIG. 11) indicating an intermediate part of a time width of the positive level slice and that of the negative level slice; and
digitized signal output means (55 in FIG. 6) for digitizing the code pattern signal (IN) provided by said reading means (20, 39) in accordance with a timing of generation of the timing clock generated by said clock generator means (121-129), so as to output a digitised signal output.

2. A code reader coupled to the code pattern digitizer system (15-43 in FIG. 3, 51-55 in FIG. 6) of claim 1, which code reader (10 in FIG. 2) integrally comprises:
a light source (17 in FIG. 2) for supplying light to the code pattern on the material;
means (18, 21-23 in FIG. 2) for guiding the light, supplied from said light source (17) and reflected at the code pattern on the material, toward the reading means (20) of said code pattern digitizer system.

3. A code pattern reading system coupled to the code pattern digitizer system (15-43 in FIG. 3, 51-55 in FIG. 6) of claim 1 or 2, which code pattern reading system comprises:
means (31-38 in FIG. 3) for decoding a content of the code pattern on the material from the digitized signal output from said digitized signal output means (55).

4. The system of claim 1, characterized in that
a) said positive level change detector means (102-112 in FIG. 9) includes:
first rectifier means (105) for rectifying the first order differentiated output provided by said first order differentiator means (51) to provide a positive level component of the first order differentiated output;
first floating level means (106-108) for supplying a first floating level (C);
a first resistor circuit (103-104) for leading the positive level component provided by said first rectifier means (105) to the first floating level (C) of said first floating level means (106-108);
a first capacitor circuit (102) coupled in parallel to said first resistor circuit (103-104);
first comparator means (109-116) for comparing a signal level (+input of 109), corresponding to the first order differentiated output provided by said first order differentiator means (51), with another signal level (-input of 109), corresponding to the first floating level (C) of said first floating level means (106-108), and for providing a first comparison result (J input) when the latter compared signal level (-input) is lower than the former compared signal level (+input),
b) said negative level change detector means (91-101 in FIG. 9) includes:
second rectifier means (94) for rectifying the first order differentiated output provided by said first order differentiator means (51) to provide a negative level component of the first order differentiated output;
second floating level means (95-97) for supplying a second floating level (B);
a second resistor circuit (92-93) for leading the negative level component provided by said second rectifier means (94) to the second floating level (B) of said second floating level means (95-97);
a second capacitor circuit (91) coupled in parallel to said second resistor circuit (92-93);
second comparator means (98-114) for comparing a signal level (-input of 98), corresponding to the first order differentiated output provided by said first order differentiator means (51), with another signal level (+input of 98), corresponding to the second floating level (B) of said second floating level means (95-97), and for providing a second comparison result (K input) when the latter compared signal level (+input) is higher than the former compared signal level (-input), and
c) sold digitized signal output means (55 in FIG. 6) includes:
a J-K type flip-flop (55) having J, K and Q terminals wherein said J terminal receives the first comparison result (J input) provided by said first comparator means (109-116), said K terminal receives the second comparison result (K input) provided by said second comparator means (98-114), and said Q terminal provides the digitized signal output corresponding to the code pattern signal (IN) provided by said reading means (20, 39).

5. The system of claim 1, characterized in that
a) said positive level change detector means (102-112 in FIG. 9) includes:
first rectifier means (105) for rectifying the first order differentiated output provided by said first order differentiator means (51) to provide a positive level component of the first order differentiated output;
first floating level means (106-108) for supplying a first floating level (C);
a first circuit (102-104) for leading the positive level component provided by said first rectifier means (105) to the first floating level (C) of said first floating level means (106-108);
first comparator means (109-116) for comparing a signal level (+input of 109), corresponding to the first order differentiated output provided by said first order differentiator means (51), with another signal level (-input of 109), corresponding to the first floating level (C) of said first floating level means (106-108), and for providing a first comparison result (J input) when the latter compared signal level (-input) is lower than the former compared signal level (+input),
b) said negative level change detector means (91-101 in FIG. 9) includes:
second rectifier means (94) for rectifying the first order differentiated output provided by said first order differentiator means (51) to provide a negative level component of the first order differentiated output;
second floating level means (95-97) for supplying a second floating level (B);
a second circuit (91-93) for leading the negative level component provided by said second rectifier means (94) to the second floating level (B) of said second floating level means (95-97);
second comparator means (98-114) for comparing a signal level (-input of 98), corresponding to the first order differentiated output provided by said first order differentiator means (51), with another signal level (+input of 90), corresponding to the second floating level (B) of said second floating level means (95-97), and for providing a second comparison result (K input) when the latter compared signal level (+input) is higher than the former compared signal level (-input), and c) said digitized signal output means (55 in FIG. 6) includes:
a J-K type flip-flop (55) having J, K and Q terminals wherein said J terminal receives the first comparison result (J input) provided by said first comparator means (109-116), said K terminal receives the second comparison result (K input) provided by said second comparator means (98-114), and said Q terminal provides the digitized signal output corresponding to the code pattern signal (IN) provided by said reading means (20, 39).

6. The system of claim 1, characterized in that
a) said positive level change detector means (102-112 in FIG. 9) includes:
first rectifier means (105) for rectifying the first order differentiated output provided by said first order differentiator means (51) to provide a positive level component of the first order differentiated output;
first floating level means (106-108) for supplying a first floating level (C);
a first circuit (102-104) for leading the positive level component provided by said first rectifier means (105) to the first floating level (C) of said first floating level means (106-108);
first comparator means (109-116) for providing a first comparison result (J input) which is generated in accordance with a difference between a signal level (+input of 109), corresponding to the first order differentiated output provided by said first order differentiator means (51), and another signal level (-input of 109), corresponding to the first floating level (C) of said first floating level means (106-108), b) said negative level change detector means (91-101 in FIG. 9) includes:
second rectifier means (94) for rectifying the first order differentiated output provided by said first order differentiator means (51) to provide a negative level component of the first order differentiated output;
second floating level means (95-97) for supplying a second floating level (B);
a second circuit (91-93) for leading the negative level component provided by said second rectifier means (94) to the second floating level (B) of said second floating level means (95-97);
second comparator means (98-114) for providing a second comparison result (K input) which is generated in accordance with a difference between a signal level (- input of 98), corresponding to the first order differentiated output provided by said first order differentiator means (51), and another signal level (+input of 98), corresponding to the second floating level (B) of said second floating level means (95-97), and c) said digitized signal output means (55 in FIG. 6) includes:
a J-K type flip-flop (55) having J, K and Q terminals wherein said J terminal receives the first comparison result (J input) provided by said first comparator means (109-116), said K terminal receives the second comparison result (K input) provided by said second comparator means (98-114), and said Q terminal provides the digitized signal output corresponding to the code pattern signal (IN) provided by said reading means (20, 39).

7. The system of claim 1, characterized in that
a) said positive level change detector means (102-112 in FIG. 9) includes:
first rectifier means (105) for rectifying the first order differentiated output provided by said first order differentiator means (51) to provide a positive level component of the first order differentiated output;
first floating level means (106-108) for supplying a first floating level (C);
a first circuit (102-104) for leading the positive level component provided by said first rectifier means (105) to the first floating level (C) of said first floating level means (106-108);
first comparator means (109-116) for providing a first comparison result (J input) which is generated in accordance with a difference between a signal level (+input of 109), corresponding to the first order differentiated output provided by said first order differentiator means (51), and another signal level (-input of 109), corresponding to the first floating level (C) of said first floating level means (106-108), b) said negative level change detector means (91-101 in FIG. 9) includes:
second rectifier means (94) for rectifying the first order differentiated output provided by said first order differentiator means (51) to provide a negative level component of the first order differentiated output;
second floating level means (95-97) for supplying a second floating level (B);
a second circuit (91-93) for leading the negative level component provided by said second rectifier means (94) to the second floating level (B) of said second floating level means (95-97);
second comparator means (98-114) for providing a second comparison result (K input) which is generated in accordance with a difference between a signal level (- input of 98), corresponding to the first order differentiated output provided by said first order differentiator means (51), and another signal level (+input of 98), corresponding to the second floating level (B) of said second floating level means (95-97), and c) said digitized signal output means (55 in FIG. 6) includes:
means (55), responsive to the first comparison result (J input) provided by said first comparator means (109-116) and the second comparison result (K input) provided by said second comparator means (98-114), for providing the digitized signal output corresponding to the code pattern signal (IN) provided by said reading means (20, 39) at a timing when the timing clock is generated by said clock generator means (121-129).

8. A code pattern digitizer system comprising:
means (20, 39 in FIG. 3) for reading a code pattern on a material to provide a code pattern signal (IN, 1 st row in FIG. 11) whose level changes in correspondence with the read code pattern;
first order differentiator means (51 in FIG. 6) for differentiating with respect to time a level change of the code pattern signal (IN) provided by said reading means (20, 39), so as to provide a first order differentiated output (2nd row in FIG. 11);
level change detector means (102-112 & 91-101 In FIG. 9), responsive to a level change in the first order differentiated output provided by said first order differentiator means (51), for detecting a level slice (3rd & 4th rows in FIG. 11) representing a timing of a level change in the first order differentiated output; second order differentiator means (124 in FIG. 10) for differentiating with respect to time a level change of the first order differentiated output provided by said first order differentiator means (51) to provide a second order differentiated output (5th row in FIG. 11);
clock generator means (121-129 in FIG. 10), responsive to the level slice detected by said level change detector means (102-112 & 91-101) and the second order differentiated output provided by said second order differentiator means (124), for generating a timing clock (7th row in FIG. 11) indicating an intermediate part of a time width of the level slice; and
digitized signal output means (55 in FIG. 6) for digitizing the code pattern signal (IN) provided by said reading means (20, 39) in accordance with a timing of generation of the timing clock generated by said clock generator means (121-129), so as to output a digitized signal output.

9. A code reader coupled to the code pattern digitizer system (15-43 in FIG. 3, 51-55 in FIG. 6) of claim 8, which code reader (10 in FIG. 2) integrally comprises:
a light source (17 in FIG. 2) for supplying light to the code pattern on the material;
means (18, 21-23 in FIG. 2) for guiding the light, supplied from said light source (17) and reflected at the code pattern on the material, toward the reading means (20) of said code pattern digitizer system.

10. A two-dimensional code reader being provided with a light source for supplying light to a two-dimensional code printed on a print material, a two-dimensional image reader which receives light reflected from the two-dimensional code and outputs an electrical signal representing an amount of the received reflected light, an optical system for focusing the reflected light of the two-dimensional code onto an image capturing place of the two-dimensional image reader, a digitizer circuit for converting the electrical signal from the two-dimensional image reader into a digitized signal, and an output circuit for outputting the digitized signal converted by the digitizer circuit, said two-dimensional code reader being characterized by comprising:
a first order differentiator (51 in FIG. 6) for differentiating the electrical signal (IN) provided by said two-dimensional image reader (20, 39) to provide a first order differentiated output (2nd row in FIG. 11);
a second order differentiator (124 in FIG. 10) for differentiating the first order differentiated output provided by said first order differentiator (51) to provide a second order differentiated output (5th row in FIG. 11);
a clock generator (121-129 in FIG. 10) for generating a timing clock (7th row in FIG. 11) indicating each timing of positive-to-negative and negative-to-positive changes in the second order differentiated output; and
a digitized signal output circuit (55 in FIG. 6), which fetches the first order differentiated output provided by said first order differentiator (51) in accordance with the timing of generation of the timing clock generated by said clock generator (121-129), for outputting the digitized signal.
